Europäisches Patentamt

European Patent Office

Office européen des brevets

(19)

(11) Veröffentlichungsnummer: **0 027 996**
B1

(12) # EUROPÄISCHE PATENTSCHRIFT

(45) Veröffentlichungstag der Patentschrift:
08.06.83

(51) Int. Cl.³: **C 09 C 1/02**

(21) Anmeldenummer: 80106419.7

(22) Anmeldetag: 21.10.80

(54) **Verfahren zur Herstellung von mineralischen Füllstoffen durch Nasszerkleinerung.**

(30) Priorität: 29.10.79 DE 2943651

(43) Veröffentlichungstag der Anmeldung:
06.05.81 Patentblatt 81/18

(45) Bekanntmachung des Hinweises auf die Patenterteilung:
08.06.83 Patentblatt 83/23

(84) Benannte Vertragsstaaten:
**AT BE DE FR GB IT NL SE**

(56) Entgegenhaltungen:
**FR-A-2 039 650**
**FR-A-2 118 348**
**FR-A-2 241 342**
**FR-A-2 272 154**
**FR-A-2 347 417**
**FR-A-2 414 067**

**Die Akte enthält technische Angaben, die nach dem Eingang der Anmeldung eingereicht wurden und die nicht in dieser Patentschrift enthalten sind.**

(73) Patentinhaber: **Plüss-Staufer AG, CH-4665 Oftringen (CH)**

(72) Erfinder: **Delfosse, Pierre, Court Evasion 2000 22, Rue Emerian, F-75000 Paris 15è (FR)**
Erfinder: **Strauch, Dieter, Kanalweg 24, CH-4800 Zofingen (CH)**

(74) Vertreter: **Reinhard, Horst, Dr. et al, Patentanwälte Dr. Horst Reinhard Dipl.-Ing. Karl-Jürgen Kreutz Leopoldstrasse 51, D-8000 München 40 (DE)**

Verfahren zur Herstellung von mineralischen Füllstoffen durch Nasszerkleinerung

Die vorliegende Erfindung betrifft ein Verfahren zur Herstellung von mineralischen Füllstoffen, insbesondere natürlichen Calciumcarbonaten, durch Nasszerkleinerung, wobei 70-80% oder mehr der Teilchen < 1 µm, aber höchstens 15% der Teilchen < 0,2 µm sind.

Zerkleinerungsverfahren für Mineralstoffe, insbesondere natürliche Calciumcarbonate auf nassem Wege gehen von zwei altbekannten Verfahren aus. Bei dem älteren Verfahren der beiden erfolgt die Zerkleinerung der wässerigen Suspension in einer horizontalen Kugelmühle, und die gröbsten Teilchen werden durch Zentrifugieren abgeschieden. Dieses für viele mineralische Stoffe (Calciumcarbonate und Kaolin) angewandte Verfahren ist beispielsweise im einzelnen in der US-A Nr. 2323550 beschrieben. Das Endprodukt wird in der feinen Fraktion des Zentrifugiervorganges erhalten, und die wässerige Suspension wird dann filtriert und das Produkt gemäss bekannten Verfahren getrocknet.

Bei diesem Zerkleinerungsverfahren mittels Kugelmühlen ist die Verwendung von Dispergiermitteln unnötig, da die erhaltenen Feinheitsgrade nicht sehr hoch sind und man im Zerkleinerungsstadium nicht mit den erhöhten Feststoffkonzentrationen arbeiten will, die sich beim Zentrifugieren ergeben. Die Konzentrationen des Mahlprodukts liegen in diesem Fall unter 60%.

Der Nachteil dieses Verfahrens besteht in der Begrenzung der Feinheit, denn z.B. bei natürlichem Calciumcarbonat kann man auf wirtschaftliche Weise nur Produkte erzielen, die 40-50 Gew.% Teilchen kleiner als 2µm und 20-25 Gew.% Teilchen kleiner als 1 µm enthalten. Dieser Feinheitsgrad erlaubt aber keine Verwendung solcher Calciumcarbonate in nennenswerten Mengen bei der Beschichtung von Papier.

Wenn eine Zerkleinerung bei höheren Feststoffkonzentrationen erfolgen soll, d.h. bei Konzentrationen über 60% und wenn eine spätere Klassierung der Teilchen vermieden werden soll, werden Dispergiermittel, z.B. Salze der Polyphosphorsäure, Polykieselsäure, Polyacryl- oder Polymetacrylsäure oder Produkte wie Alkylarylsulfonate, Lignosulfonate, Alginate usw. verwendet. Diese Stoffe senken die Viskosität der wässerigen Lösungen und erleichtern das Dispergieren von Feststoffteilchen. Ein entsprechendes Verfahren ist bereits in der GB-A Nr. 1215576 beschrieben.

Gemäss einem neueren Verfahren erfolgt die Zerkleinerung auf nassem Wege in Zerkleinerungsvorrichtungen mit Mikrokugeln oder Perlen oder Sand, deren Achse im allgemeinen senkrecht angeordnet ist und bei denen die Zerkleinerungselemente einen Durchmesser im Grössenordnungsbereich von 0,5-5 mm haben, im Gegensatz zu den bei den obigen Verfahren eingesetzten Kugelmühlen, die mit Kugeln im Durchmesser von 20-80 mm arbeiten.

Die Anwendung solcher Einrichtungen zum Zerkleinern ermöglicht höhere Feinheitsgrade als mit Kugelmühlen erzielbar sind. So ist es möglich, Feinheiten von 95 Gew.% Teilchen unterhalb 2 µm bis zu 70-80 Gew.% Teilchen unterhalb 1 µm und 25-35 Gew.% Teilchen unterhalb 0,2 µm zu erreichen. Hierbei sind die Viskositäten der wässerigen Lösungen so, dass zwangsläufig Dispergiermittel zum Absenken der Viskositäten verwendet werden müssen. Der Nachteil dieses Verfahrens besteht darin, dass der Anstieg des Prozentsatzes an Teilchen, die kleiner sind als 1 µm, einen entsprechenden Anstieg des Prozentsatzes an hochfeinen Teilchen mit sich bringt, die kleiner sind als 0,2 µm (25-35%). Diese feinsten Teilchen sind nachteilig für die Verwendung dieses Stoffes in Streichpapier und Farben (siehe DE-A Nr. 2808425). In der französischen Patentanmeldung Nr. 78.30723 vom 30.10.78 ist ein Verfahren zum Beschichten von Papier auf der Basis von natürlichem Calciumcarbonat als einzigem Pigment beschrieben, bei dem ein Beschichtungsverfahren mit hoher Konzentration angewendet wird.

In der deutschen Patentanmeldung Nr. 2943652.0-43 sind mineralische Füllstoffe beschrieben, bei denen das Verhältnis

$$R = \frac{\% < 1\ \mu m}{\% < 0,2\ \mu m}$$

grösser ist als 3,5 und vorzugsweise zwischen 4 und 10 liegt. Dabei ist zu beachten, dass der Prozentsatz an Teilchen, die kleiner sind als 0,2 µm so klein wie möglich sein sollte und der Prozentsatz an Teilchen, die kleiner sind als 1µm so hoch wie möglich sein sollte.

Weiterhin ist aus der FR-A Nr. 2347417 = DE-A Nr. 2715721 ein Verfahren zur Herstellung von ultrafeiner Kalkschlämmkreide bekannt, die als Füllstoff verwendbar ist, der frei von harten abrasiven Teilchen ist.

Aufgabe dieser Veröffentlichung ist die Schaffung eines verbesserten Füllstoffs für Massen auf der Basis von Polymeren, wie Kunststoff- und Kautschukmassen, beispielsweise Polyvinylchloridmassen, sowie Massen zum Beschichten von Papier oder dergleichen, die als Füllstoff fein vermahlene Kalkschlämmkreide mit wenigstens 95 Gew.% an Teilchen mit einem kugeläquivalenten Durchmesser von nicht mehr als 5 µm und wenigstens 40 Gew.% und, vorzugsweise 70 Gew.% an Teilchen, mit einem kugeläquivalenten Durchmesser von nicht mehr als 2 µm und nicht mehr als 0,5 Gew.% an Teilchen mit einem kugeläquivalenten Durchmesser von mehr als 10 µm, vorzugsweise 5 µm, enthalten (S. 9, Abs. 2).

Die Lösung dieser Aufgabe besteht darin, dass Kalkschlämmkreide in einer wässerigen Suspension mit einem Mahlmedium vermahlen wird, das im wesentlichen aus Calciumcarbonat in einer Form besteht, die eine Druckfestigkeit besitzt, die grösser ist als diejenige der Schlämmkreide.

Schliesslich ist aus der FR-A Nr. 2272154 ein Verfahren zur Verbesserung der optischen Eigenschaften von synthetischen Na-Al-Silikaten be-

kannt, welche in Papier eingesetzt werden. Nach dem Prinzip Perl-Mühle werden diese Na-Al-Silikate mit Glaskugeln von 1-2 mm bei einem Feststoffgehalt von 10-40 gemahlen.

Die Anwendung des Verfahrens wird nur für synthetische Mineralien beschrieben. In bezug auf die Anwendung für synthetische Na-Al-Silikate geht es nicht um eine eigentliche Feinmahlung, sondern um eine Reduktion der Aggregatanteile im fertigen Produkt. Dabei wird natürlich eine etwas bessere Feinheit erreicht, was in der Anwendung in Papier bessere optische Eigenschaften ergibt.

Eine Aufgabe der vorliegenden Erfindung ist es, ein Verfahren zur Herstellung von mineralischen Füllstoffen, insbesondere eines natürlichen Calciumcarbonats, welches den grösstmöglichen Anteil an Teilchen, die kleiner sind als 1 µm (70-80% und mehr) und den kleinstmöglichen Anteil an feinsten Teilchen, die kleiner sind als 0,2 µm (höchstens 15%) enthält, zu schaffen.

Eine weitere Aufgabe der Erfindung ist es, Suspensionen mit sehr starken Konzentrationen, d.h. bis zu 80% an Feststoffen herstellen zu können, was ein grosser Vorteil für die Beschichtung von Papier gemäss dem Verfahren mit hoher Konzentration an Feststoffen, dem sogenannten HCS-Verfahren ist.

Diese Aufgaben werden erfindungsgemäss dadurch gelöst, dass die Zerkleinerung ohne Dispergiermittel und bei einer Feststoffkonzentration von unter 60 Gew.% durchgeführt wird, dass die zerkleinerte Suspension filtriert und der ca. 20% Wasser enthaltende Filterkuchen entweder getrocknet oder durch Hinzufügung eines Dispergiermittels in eine Suspension mit niedriger Viskosität übergeführt wird.

Es hat sich erfindungsgemäss herausgestellt, dass die Schaffung hochfeiner oder feinster Teilchen (kleiner als 0,2 µm) in einer Zerkleinerungsvorrichtung mit Mikroelementen stark beeinflusst wird durch die Feststoffkonzentration in der Zerkleinerungsstufe. Je schwächer die Feststoffkonzentration der natürlichen Calciumcarbonatsuspension ist, um so höher ist das Verhältnis

$$\frac{\% \text{ Teilchen} < 1 \text{ µm}}{\% \text{ Teilchen} < 0,2 \text{ µm}}$$

Diese Regel findet sich bei allen mineralischen Füllstoffen, z.B. natürlichen erdalkalischen Carbonaten bestätigt, gleichgültig ob es sich um Kreide, Kokkolith, Marmor oder Dolomit handelt. Die folgende Tabelle I zeigt diesen Tatbestand.

*Tabelle I*

*Zerkleinerung von natürlichem Kalkspat*

| Feststoffkonzentration bei Zerkleinerung | % Teile < 1 µm | % Teile < 0,2 µm | $R = \dfrac{\% < 1 \text{ µm}}{\% < 0,2 \text{ µm}}$ |
|---|---|---|---|
| 76% | 73,5 | 28 | 2,62 |
| 72% | 73 | 26 | 2,81 |
| 70% | 75 | 24 | 3,12 |
| 65% | 72,5 | 18 | 4,01 |
| 55% | 73 | 15 | 4,86 |
| 40% | 74 | 9 | 8,22 |
| 30% | 72,5 | 7 | 10,35 |

Die Tabelle zeigt, dass bei einem nahezu konstanten Prozentsatz an Teilchen, die kleiner sind als 1µm (im Bereich zwischen 72,5 und 74%) der Prozentsatz an Teilchen, die kleiner sind als 0,2 µm um so geringer ist, als die Konzentration der der Zerkleinerung unterworfenen Suspension selbst geringer ist. Das Verhältnis

$$\frac{\% < 1 \text{ µm}}{\% < 0,2 \text{ µm}}$$

steigt von 2,62 bis 10,35. Um wässerige Suspensionen natürlicher Calciumcarbonate zu erzielen, die Feststoffkonzentrationen von 72-76% oder mehr enthalten, wie sie für die Streichpapierindustrie erforderlich sind, und deren Feinheitsgrad ca. 70-75% Teilchen kleiner als 1µm entspricht, muss bis zu 1% oder mehr eines Dispergiermittels (z.B. des Typs Alkalisalze von Polyacrylsäuren) verwendet werden. Wenn andererseits die wässerige Lösung getrocknet werden soll, um pulverförmiges Calciumcarbonat zu erhalten, geht dieses Dispersionsmittel grossenteils verloren.

Es hat sich erfindungsgemäss herausgestellt, dass es im Gegensatz zum herkömmlichen Verfahren möglich und von Vorteil ist, die Zerkleinerung ohne Dispergiermittel durchzuführen, und zwar z.B. gemäss dem nachfolgend beschriebenen Ausführungsbeispiel:

*Ausführungsbeispiel:*

Es wird eine wässerige Suspension aus natürlichem Calciumcarbonat (Kreide oder Kalkspat), welches vorzerkleinert ist, d.h. welches z.B. 1-10 Gew.% Teilchen enthält, die grösser sind als Siebgrösse 325 (Maschenweite 43 µm), hergestellt. Der Feinheitsgrad des vorzerkleinerten Stoffs ist verhältnismässig unwichtig, da es ausreicht, entsprechend die Zeit oder Leistung der abschliessenden Zerkleinerungsstufe einzustellen.

Die Feststoffkonzentration der dem Zerkleinerungsvorgang auszusetzenden Suspension wird so gewählt, dass die Viskosität der Suspension ohne Dispergiermittel für eine vorherbestimmte Feinheit des Endprodukts einen guten Lauf der mit Kügelchen arbeitenden Zerkleinerungseinrichtung ermöglicht. Es wird eine Feststoffkonzentration gewählt, die um so niedriger ist, je höher das erwünschte Verhältnis

$$R = \frac{\% < 1 \ \mu m}{\% < 0,2 \ \mu m}$$

Sie kann also zwischen 25% und 60% an Feststoffen liegen. Diese Suspension wird ohne Dispergiermittel in einer diskontinuierlich oder kontinuierlich arbeitenden Zerkleinerungsvorrichtung mit Mikroelementen, bei einmaligem Durchlauf oder vorzugsweise diskontinuierlich im Kreislauf bis zum Erhalt der gewünschten Feinheit zerkleinert.

Eines der Merkmale der Erfindung besteht also darin, die Zerkleinerung ohne Dispergiermittel, aber bei ausreichend geringer Viskosität zu erreichen, d.h. mit schwacher Feststoffkonzentration, so dass in der Zerkleinerungsvorrichtung Mahlelemente von kleinem Durchmesser verwendet werden können, was die Mahlausbeute begünstigt. Es werden z.B. Kügelchen mit einem mittleren Durchmesser von 0,4-3 mm verwendet. Man kann Kugeln aus Glas, Ottawa-Sand, Buzzard-Leighton-Sand, oder Aluminiumoxid- oder Zirconoxidkugeln verwenden. Ein Nachteil besteht jedoch dabei in der Schwierigkeit, zu vermeiden, dass die Mahlkugeln vom Endprodukt mitgerissen werden. Gemäss der Erfindung wird diese Schwierigkeit dadurch umgangen, dass die Feststoffkonzentration der Suspension abgesenkt wird, d.h. dass die Viskosität erniedrigt wird.

Nach dem Zerkleinern der Calciumcarbonatsuspension ohne Dispergiermittel wird das Produkt in einer Filterpresse, in einem Rohrfilter, einem Tuchfilter, einem Spaltfilter oder Vakuumfilter filtriert, um einen Filterkuchen bzw. eine Filterpaste zu erhalten, die ca. 20% Wasser enthält, was mit Dispergiermittel enthaltenden Suspensionen unmöglich wäre.

Der erhaltene Filterkuchen kann dann entweder getrocknet oder durch Hinzufügen eines Dispergiermittels in eine Suspension mit niedriger Viskosität überführt werden. Im zuerst genannten Fall erfolgt das Trocknen in bekannter Weise, und man erhält ein pulvriges Erzeugnis, welches kein Dispergiermittel enthält, was ein wichtiger Vorteil unter dem Gesichtspunkt der Herstellungskosten ist. Im zweiten Fall reicht es, wenn man ein in flüssiger Form lieferbares Endprodukt erhalten will, dem Filterkuchen die nötige Menge Dispergiermittel hinzuzufügen, die ausreicht, um eine Verflüssigung mit gewünschter Viskosität zu erzielen. Dieser Vorgang wird in einem kontinuierlichen Mischer, einer Schnecke oder einer sonstigen Aufbruchvorrichtung durchgeführt.

Es hat sich gezeigt, dass man bei einem Vorgehen gemäss der Erfindung für ein bestimmtes Produkt weniger Dispergiermittel verbraucht, als wenn dieses in der Zerkleinerungsstufe hinzugefügt wird, wobei die Ersparnis an Dispergiermittel im Grössenordnungsbereich von 20% liegt.

Im Beispiel 1 der FR-A Nr. 2347417 = DE-A Nr. 2715721 wird von 43,7 Gew.% Feststoffen ausgegangen und kein Dispergiermittel verwendet. Daraus kann aber für einen Durchschnittsfachmann nicht die aus einer Kombination von drei Merkmalen aufgebaute Lehre zum technischen Handeln gemäss der Erfindung entnommen werden. Vielmehr handelt es sich bei dieser Veröffentlichung um eine rein zufällige Tatsache, dass im Beispiel 43,7 Gew.% Feststoffe verwendet werden, die unter 60% liegen und dass ein Dispergiermittel nicht erwähnt wird. Auf S. 5, Zeilen 20 bis 33 der französischen Schrift wird bei der Beschreibung des Verfahrens erwähnt, dass bei einer Nassvermahlung gewöhnlich Dispergiermittel zugesetzt werden, damit bei einem hohen Feststoffgehalt gemahlen werden kann. Dies seien zwei wichtige Merkmale für eine wirksame Nassmahlung. Der Durchschnittsfachmann wird also demnach eine Nassmahlung bei einem hohen Feststoffgehalt unter Verwendung von Dispergiermitteln durchführen.

Es gibt also für den Durchschnittsfachmann in dieser Veröffentlichung keine Hinweise, dass eine Nassmahlung bewusst ohne Dispergiermittel und bei einem niedrigen Feststoffgehalt durchgeführt werden soll und dass dabei Produkte mit besonderen Eigenschaften erreicht werden können, wie diese in der vorliegenden Anmeldung beschrieben sind.

Auch der FR-A Nr. 2272154 kann der Durchschnittsfachmann nicht entnehmen, dass er eine Nassmahlung bewusst ohne Dispergiermittel und bei einem niedrigen Feststoffgehalt durchführen soll, um die in der vorliegenden Anmeldung aufgeführten günstigen Eigenschaften zu erreichen.

Die erfindungsgemäss erzielbaren Vorteile lassen sich wie folgt zusammenfassen:

1. Es werden Produkte erhalten, die ein Verhältnis

$$R = \frac{\% < 1 \ \mu m}{\% < 0,2 \ \mu m}$$

haben, welches sehr hoch liegt, und zwar über 3,5, d.h. z.B. 85% der Teilchen sind kleiner als 1 μm und 10% oder weniger der Teilchen sind kleiner als 0,2 μm, was mit den bisher bekannten Verfahren für natürliche Calciumcarbonate unmöglich ist.

2. Es werden pulvrige Produkte ohne Dispergiermittel erhalten.

3. Es werden konzentrierte Suspensionen mit einer Konzentration von 75-80 Gew.% oder mehr mit einer minimalen Menge Dispergiermittel erhalten.

**Patentansprüche**

1. Verfahren zur Herstellung von mineralischen Füllstoffen, insbesondere natürlichen Calciumcarbonaten, durch Nasszerkleinerung, wobei 70-80% oder mehr der Teilchen < 1 μm, aber höchstens 15% der Teilchen < 0,2 μm sind, dadurch gekenn-

zeichnet, dass die Zerkleinerung ohne Dispergiermittel und bei einer Feststoffkonzentration von unter 60 Gew.% durchgeführt wird, dass die zerkleinerte Suspension filtriert und der ca. 20% Wasser enthaltende Filterkuchen entweder getrocknet oder durch Hinzufügen eines Dispergiermittels in eine Suspension mit niedriger Viskosität überführt wird.

2. Verfahren nach Anspruch 1, dadurch gekennzeichnet, dass Mahlelemente von kleinem Durchmesser, vorzugsweise von 0,4-3 mm, verwendet werden.

3. Verfahren nach einem der beiden Ansprüche 1 oder 2, dadurch gekennzeichnet, dass Suspensionen mit 80% an Feststoffen oder mehr zubereitet werden.

## Revendications

1. Procédé de fabrication de matières de charge minérales, en particulier de carbonates de calcium naturels, par broyage humide, 70 à 80% ou plus des particules étant inférieures à 1 µm, mais 15% au plus sont inférieures à 0,2 µm, caractérisé en ce que le broyage est exécuté sans agent de dispersion et avec une concentration en solides inférieure à 60% en poids, que la suspension broyée est filtrée et le gâteau de filtre contenant environ 20% d'eau est soit séché, soit transformé, par addition d'un agent de dispersion, en une suspension à faible viscosité.

2. Procédé suivant la revendication 1, caractérisé en ce que des éléments de broyage de petit diamètre, de préférence de 0,4-3 mm, sont utilisés.

3. Procédé suivant l'une ou l'autre des revendications 1 ou 2, caractérisé en ce qu'on prépare des suspensions avec 80% ou plus de solides.

## Claims

1. Process for the manufacture of mineral fillers, especially natural calcium carbonates, by wet grinding, whereby 70-80% or more of the particles are < 1 µm but a maximum of 15% of the particles are < 0.2 µm, characterised in that the grinding is carried out without dispersant and at a solids concentration of less than 60% by weight, in that the ground suspension is filtered and the resulting filter cake which contains about 20% water is either dried or, by the addition of a dispersant, converted to a suspension of lower viscosity.

2. Process according to claim 1, characterised in that grinding elements of small diameter, preferably 0.4-3 mm, are used.

3. Process according to claim 1 or 2, characterised in that the suspensions are prepared with a solids content of 80% or more.